Europäisches Patentamt

European Patent Office

Office européen des brevets

(11) Veröffentlichungsnummer : **0 596 396 B1**

(12) **EUROPÄISCHE PATENTSCHRIFT**

(45) Veröffentlichungstag der Patentschrift :
30.08.95 Patentblatt 95/35

(21) Anmeldenummer : **93117431.2**

(22) Anmeldetag : **27.10.93**

(51) Int. Cl.⁶ : **H01G 4/32**

(54) Elektrischer Kondensator und Verfahren zu seiner Herstellung.

(30) Priorität : **05.11.92 DE 4237392**

(43) Veröffentlichungstag der Anmeldung :
**11.05.94 Patentblatt 94/19**

(45) Bekanntmachung des Hinweises auf die
Patenterteilung :
**30.08.95 Patentblatt 95/35**

(84) Benannte Vertragsstaaten :
**AT BE CH DE FR GB IT LI**

(56) Entgegenhaltungen :
**EP-A- 0 034 662**

(56) Entgegenhaltungen :
**PATENT ABSTRACTS OF JAPAN vol. 16, no.
435 (E-1263)10. September 1992 & JP-A-04 152
508 (RUBYCON CORP) 26. Mai 1992
PATENT ABSTRACTS OF JAPAN vol. 16, no.
435 (E-1263)10. September 1992 & JP-A-04 152
508**

(73) Patentinhaber : **SIEMENS MATSUSHITA
COMPONENTS GmbH & CO KG
Balanstrasse 73,
Postfach 80 17 09
D-81617 München (DE)**

(72) Erfinder : **Vetter, Harald
Wichernweg 5
D-89520 Heidenheim (DE)**

(74) Vertreter : **Fuchs, Franz-Josef, Dr.-Ing. et al
Postfach 22 13 17
D-80503 München (DE)**

**Beschreibung**

Die Erfindung betrifft einen elektrischen Kondensator, insbesondere für die Energie-Elektronik, der aus einem flachgepreßten Wickel aus dielektrischen Kunststoffolien besteht, die mit Elektroden aus, insbesondere regenerierfähig dünnen, Metallschichten versehen sind, und bei dem jeweils eine Elektrode zu einer Stirnseite des Flachwickels herausgeführt und dort mit einer Schoopschicht kontaktiert ist.

Die Herstellung derartiger selbstheilender Flachwickelkondensatoren ist allgemein bekannt. Hierbei wird auf speziellen Maschinen mit einem geteilten Wickeldorn die Kondensatorfolie erfaßt und zu einem Wickelrohling gewickelt. Anschließend wird der Rohling vom Dorn gezogen, gepreßt, schoopkontaktiert, ggf. getempert und entsprechend dem Einsatzfall weiter verarbeitet, z. B. mit Anschlußdrähten an den Schoopschichten versehen und in ein Gehäuse eingebaut.

Eine Weiterentwicklung dieser Flachwickeltechnik ist in der EP 0 034 662 A1 beschrieben. Hierbei hat der Wickeldorn im Querschnitt eine ellipsenförmige Geometrie. Die Folienspannung bzw. die Folienlaufgeschwindigkeit ist bei dieser Dorngeometrie nicht mehr ausreichend konstant. Die damit verbundenen Schwierigkeiten sollen durch eine gefederte Ablaufschwinge gemildert werden, wobei eine Zwangssteuerung antizyklisch zur Geometrie des elliptischen Wickelrohlings vorgesehen ist.

Allen bekannten Flachwickelverfahren sind zumindest zwei qualitätsentscheidende Arbeitsschritte gemeinsam, nämlich daß der Wickelrohling nach dem Wickeln vom Dorn abgezogen und anschließend in die Flachwickelgeometrie gepreßt wird.

Beim Abziehen des Wickelrohlings vom Dorn besteht die Gefahr, daß der Wickel teleskopiert. Die Gefahr steigt mit dem Folienzug und der Wickelgeometrie. Bei Kondensatoren für die Leistungs/Energieelektronik ist die geforderte Kontaktbelastbarkeit ohne Teleskopiereffekt nur bei ausreichender Spulengüte (die einen Mindestfolienzug erfordert) realisierbar. Versuche haben ergeben, daß der Folienzug jedoch nicht soweit reduzierbar ist, daß das Ziel "aktzeptable Spulengüte ohne Teleskopiereffekt" erfüllt werden kann.

Bei dem nächsten Arbeitsschritt, dem Flachpressen des Wickelrohlings, ist die Preßkraft so einzustellen, daß vorgeschriebene Technologieparameter erreicht werden. Unvermeidlich hierbei ist aber eine vergleichsweise scharfe Knickkante. Diese Zone im Bereich der Knickkante ist kritisch in Bezug auf die Selbstheilfähigkeit bzw. die Lebensdauer des Flachwickelkondensators. Eine Reduzierung der Preßkraft, so daß keine starke mechanische Belastung durch die Verformung des Dielektrikums auftritt, ist erfahrungsgemäß ohne Beeinträchtigung des Betriebsverhaltens nicht möglich.

Aufgabe der vorliegenden Erfindung ist es daher, einen selbstheilenden und insbesonderen impulsfesten Flachwickelkondensator für die Leistungs/Energie-Elektronik sowie ein Verfahren zu seiner Herstellung anzugeben, bei dem die vorstehend aufgezeigten Schwierigkeiten nicht auftreten.

Diese Aufgabe wird erfindungsgemäß dadurch gelöst, daß im Innern des Flachwickels ein Stützelement angeordnet ist, das zweimal, an diametral gegenüberliegenden Stellen geteilt ist, und daß die Dicke des Stützelements derart bemessen ist, daß die Knickzonen des Flachwickels die Regenerierfähigkeit und/oder die Lebensdauer des Kondensators nicht beeinträchtigen.

Zweckmäßige Ausgestaltungen des Kondensators gemäß der Erfindung sowie dessen Herstellung sind in den Unteransprüchen angeführt.

Die Erfindung wird anhand der folgenden Ausführungsbeispiele näher erläutert.

In der dazugehörenden Zeichnung zeigen

FIG 1 einen auf einen Wickeldorn angeordneten Kondensator,

FIG 2 eine vergrößerte Einzelheit aus FIG 1,

FIG 3 einen Vergleich zwischen einem herkömmlichen Kondensator und einem Kondensator nach der vorliegenden Erfindung,

FIG 4 ein auf einen Wickeldorn angeordnetes Stützelement,

FIG 5 das Stützelement gemäß FIG 4 nach dem Zusammenpressen,

FIG 6 ein weiteres auf einem Wickeldorn angeordnetes Stützelement und

FIG 7 das Stützelement gemäß FIG 6 nach dem Zusammenpressen.

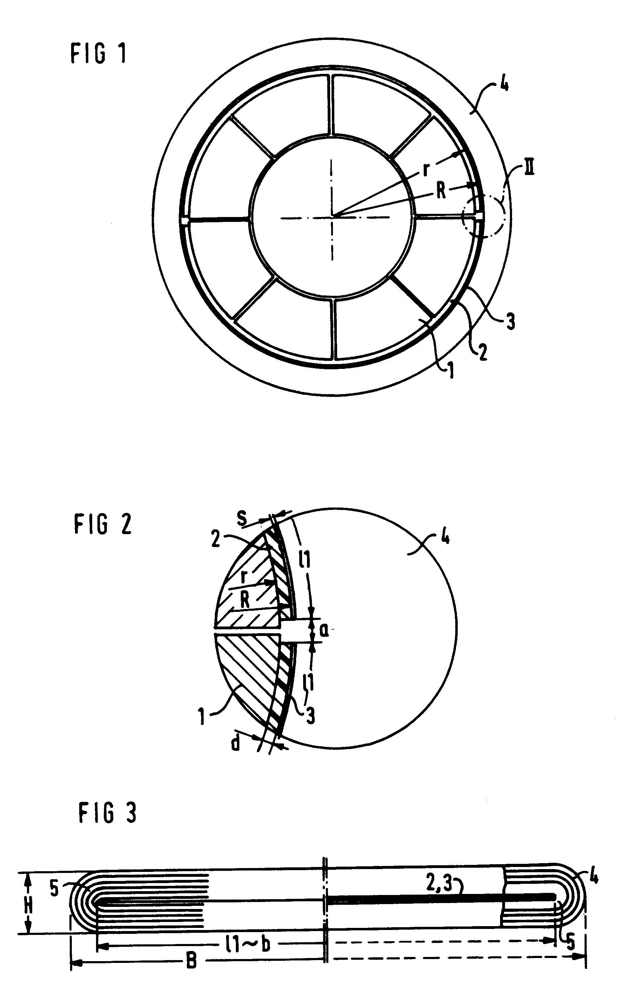

In der FIG 1 ist ein innenspannender Rundwickeldorn 1 mit dem Radius r dargestellt. Auf dem Rundwickeldorn 1 ist ein Stützelement 2 mit der Dicke d angeordnet, das zweimal an diametral gegenüberliegenden Seiten geteilt ist. Auf dem Stützelement 2 befindet sich eine vergleichsweise dünne Deckfolie 3, auf der der Wickelrohling 4 mit dem Innenradius R angeordnet ist.

Die FIG 2 zeigt einen vergrößerten Ausschnitt aus FIG 1. Hier ist zu erkennen, daß die zwei Teilstücke des Stützelements 2 mit einem Abstand a auf dem Wickeldorn 1 angeordnet sind. Der Abstand a und die Länge l1 des Stützelements 2 sind für die Gestaltung des Flachwickels wesentlich, da diese Beziehung den optimalen Formschluß der Deckfolie 3 bzw. des Wickels 4 berücksichtigt.

Wenn die Deckfoliendicke s gegen 0 geht, gilt mit ausreichender Genauigkeit:

$$(1) \qquad a = 2d,$$
$$(2) \qquad l1 = (2\pi \, (r + d) \, - \, 4 \, d)/2,$$
$$(3) \qquad b = (r + d)\pi,$$
$$(4) \qquad r = (2b + 4d)/(2\pi - d),$$

wobei in den Gleichungen (1) bis (4) a dem Abstand entspricht, mit dem das Stützelement 2 auf dem Wickeldorn 1 angeordnet ist, d die Dicke des Stützelements 2, l1 die halbe Länge des Stützelements 2, r der Wickeldornradius und b die Wickelinnenbreite (entspricht etwa l1) bedeuten.

In der FIG 3 ist ein in der Mitte geteilter Flachwickel 4 dargestellt, bei dem die linke Hälfte nach dem Stand der Technik und die rechte nach der vorliegenden Erfindung gefertigt ist. Bei dem in der linken Hälfte dargestellten Flachwickelkondensator nach dem Stand der Technik ist erkennbar, daß die Knickzone 5 stark und scharf ausgebildet ist, während beim in der rechten Hälfte dargestellten Kondensator nach der Erfindung die Knickzone 5 insbesondere im Innenbereich einen vergrößerten Radius aufweist.

Wickelversuche, insbesondere mit Wickeln großer Geometrie (z. B. B = 160 mm, H = 20 mm, Länge von Stirnseite zu Stirnseite = 155 mm) haben ergeben, daß eine ausreichende Spulgüte nur mit einem Stützelement 2 und ggf. einer Deckfolie 3 zu erreichen ist, und gleichzeitig der Teleskopiereffekt vermieden werden kann.

Das Stützelement 2 besteht aus einem nicht leitenden Material, z. B. Kunststoff (Polyester, Polyimid...) oder auch Preßspan, wobei die Deckfolie 3 auf das Stützelement 2 aufkaschiert sein kann. Die Dicke d des Stützelements 2 liegt vorzugsweise zwischen ca. 0,1 und 1,0 mm, wogegen die Deckfolie s vorzugsweise zwischen ca. 10 und 100 µm dick ist.

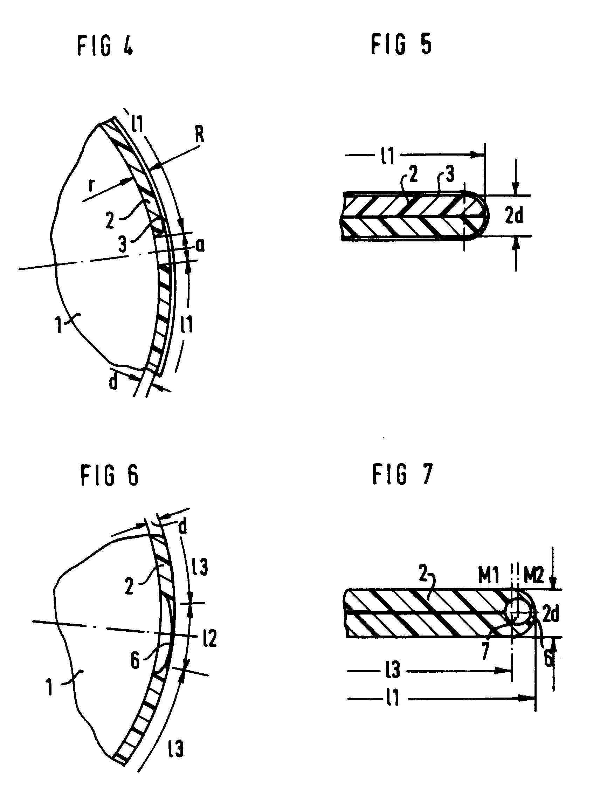

In den FIG 4 und 5 ist eine weitere Ausgestaltung eines Stützelements 2 dargestellt, bei dem der Abstand a auf den Wickeldorn a = d ($\pi$ - 2) beträgt. Die-se Beziehung berücksichtigt, daß das Stutzelement 2 im Kantenbereich eine Abrundung aufweist, deren Radius vorzugsweise der Dicke d des Stützelements entspricht. Hierdurch wird ein optimaler Formschluß der Deckfolie 3 nach dem Pressen des Wickels gewährleistet. Die Deckfolie 3 kann beispielsweise auf das Stützelement 2 geklebt werden. In diesem Fall empfiehlt es sich, die Trennstelle der Deckfolie 3 etwa in der Mitte des Flachwickels zu platzieren, um Überlappungen zu vermeiden, die zur Knick- und Druckstellen im Wickel führen können. Alternativ kann als Deckfolie 3 ein Schrumpfschlauch eingesetzt werden.

Bei einem Stutzelement 2 nach den FIG 4 und 5 gilt angenähert:

$$(5) \qquad a = d (\pi - 2)$$
$$(6) \qquad l1 = 2\pi(r + d) + 4d - 2d\pi)/2$$
$$(7) \qquad r = (2b + 2d\pi - 4d)/(2\pi - d).$$

In den FIG 6 und 7 ist ein Stützelement 2 dargestellt, das kostengünstig als Kunststoffspritzteil hergestellt werden kann. Durch geeignete Formgebung wird ein Gelenk 6 erzeugt, z. B. durch eine im flachgedrückten Formteil als Bohrung 7 dargestellte Einzelheit. Die Wandstärke wird so gewählt, daß einerseits der innenspannende Wickeldorn 1 bei der Wickelherstellung die Gelenkstelle 6 nicht abreißt, und andererseits aber die Flexibilität des Stützelements 2 noch so hoch ist, um die Funktion sicher zu erfüllen. Die Berechnung von a, l1 und r kann durch die Gleichungen (1) bis (7) erfolgen. Der Abstand 12 (s. auch FIG 7 M1 und M2) beträgt ungefähr d$\pi$.

Die Formstabilität des Stützelements 2 wird hauptsächlich durch die Materialwahl und die Wandstärke d bestimmt. Bei Variation der Einflußgrößen muß folgende Beziehung berücksichtigt werden:

$$(8) \qquad d2 = d1 (E1/E2)0,33$$

mit d2 Wandstärke an der Stelle M2, d1 Wandstärke an der Stelle M1, E1 Elastizitätsmodul 1 (N/mm² und E2 = Elastizitätsmodul 2 (N/mm²).

Die in den Ausführungsbeispielen dargestellten Formen eines Stützelements 2 gewährleisten eine günstige Gestaltung der Knickzone 5 des Flachwickels 4, so daß die Aufgabe, eine mechanische Überbeanspruchung des Dielektrikums und damit eine Beeinträchtigung des Selbstheilverhaltens zu vermeiden, erreicht wird.

Ein weiterer Vorteil besteht darin, daß bei der Herstellung des Wickels 4 mit praktisch konstantem Folienzug und wirtschaftlichen Wickelgeschwindigkeiten ohne Einbußen der Spulgüte und ohne Teleskopiereffekt gearbeitet werden kann. Insbesondere wird die geforderte Spulgenauigkeit ohne Teleskopiereffekt auch bei Wickeln mit großen geometrischen Abmessungen erreicht, so daß die fertigen Flachwickelkondensatoren eine hohe Impulsbelastbarkeit besitzen. Die Impulsbelastbarkeit kann dabei weiter gesteigert werden, wenn die Ränder der Kunststoffolien in den metallfreien Freirandbereichen mit einem Wellen- oder Stufenschnitt versehen sind, wie es in der DE 32 24 194 A1 beschrieben ist.

**Patentansprüche**

1.  Elektrischer Kondensator, insbesondere für die Energie-Elektronik, der aus einem flachgepreßten Wickel aus dielektrischen Kunststoffolien besteht, die mit Elektroden aus, insbesondere regenerierfähig dünnen Metallschichten versehen sind, und bei dem jeweils eine Elektrode zu einer Stirnseite des Flachwickels herausgeführt und dort mit einer Schoopschicht kontaktiert ist, **dadurch gekennzeichnet,** daß im Inneren des Flachwinkels (4) ein Stützelement (2) angeordnet ist, das zweimal, an diametral gegenüberliegenden Stellen geteilt ist, und daß die Dicke (d) des Stützelements (2) derart bemessen ist, daß die Knickzonen (5) des Flachwickels (4) die Regenerierfähigkeit und/oder die Lebensdauer des Kondensators nicht beeinträchtigen.

2.  Elektrischer Kondensator nach Anspruch 1, **dadurch gekennzeichnet,**

daß das Stützelement (2) aus zwei über einander angeordneten Teilen besteht.

3. Elektrischer Kondensator nach Anspruch 1 oder 2,
   **dadurch gekennzeichnet,**
   daß die Ecken des Stützelements (2) abgerundet sind.

4. Elektrischer Kondensator nach Anspruch 2 oder 3,
   **dadurch gekennzeichnet,**
   daß die Teilstücke des Stützelements (2) durch ein Gelenk (6) miteinander verbunden sind.

5. Elektrischer Kondensator nach einem der Ansprüche 1 bis 4,
   **dadurch gekennzeichnet,**
   daß auf der dem Wickel (4) zugewandten Seite des Stützelements (2) eine Folie (3) angeordnet ist.

6. Elektrischer Kondensator nach einem der Ansprüche 1 bis 5,
   **dadurch gekennzeichnet,**
   daß das Stützelement (2) eine Dicke von ca. 0,1 bis ca. 2 mm besitzt.

7. Elektrischer Kondensator nach Anspruch 5,
   **dadurch gekennzeichnet,**
   daß die Folie eine Dicke von ca. 10 bis ca. 100μm besitzt.

8. Verfahren zum Herstellen eines elektrischen Kondensators nach einem der Ansprüche 1 bis 7,
   **dadurch gekennzeichnet,**
   daß auf einem Wickeldorn (1) das Stützelement (2) angeordnet wird, daß anschließend der Kondensatorwickel (4) hergestellt wird, und daß nach dem Herausziehen des Wickeldorns (1) der Wickel flachgepreßt wird.

9. Verfahren nach Anspruch 8,
   **gekennzeichnet** durch die Verwendung von zwei Stützelementen (2), die mit einem Abstand (a) auf den Wickeldorn (1) angeordnet sind.

10. Verfahren nach Anspruch 8,
    **gekennzeichnet** durch die Verwendung von einem Stützelement (2), das an den späteren Knickstellen Gelenke (6) aufweist.

**Claims**

1. Electrical capacitor, preferably for power electronics, which comprises a flat-pressed winding made of dielectric plastic films which are provided with electrodes made of thin metal layers which can preferably be regenerated and in which in each case one electrode is passed out at one end of the flat winding and is made contact with there by a sprayed-metal layer, characterized in that a supporting element (2) is arranged in the interior of the flat winding (4), which supporting element (2) is split twice at diametrically opposite points, and in that the thickness (d) of the supporting element (2) is dimensioned in such a manner that the bend zones (5) of the flat winding (4) do not adversely affect the regeneration capability and/or the life of the capacitor.

2. Electrical capacitor according to Claim 1, characterized in that the supporting element (2) comprises two parts which are arranged one above the other.

3. Electrical capacitor according to Claim 1 or 2, characterized in that the corners of the supporting element (2) are rounded.

4. Electrical capacitor according to Claim 2 or 3, characterized in that the parts of the supporting element (2) are connected to one another by means of a joint (6).

5. Electrical capacitor according to one of Claims 1 to 4, characterized in that a film (3) is arranged on that side of the supporting element (2) which faces the winding (4).

6. Electrical capacitor according to one of Claims 1 to 5, characterized in that the supporting element (2) has a thickness of approximately 0.1 to approximately 2 mm.

7. Electrical capacitor according to Claim 5, characterized in that the film has a thickness of approximately 10 to approximately 100 μm.

8. Method for production of an electrical capacitor according to one of Claims 1 to 7, characterized in that the supporting element (2) is arranged on a winding mandrel (1), in that the capacitor winding (4) is produced subsequently, and in that the winding is pressed flat after the winding mandrel (1) has been withdrawn.

9. Method according to Claim 8, characterized by the use of two supporting elements (2), which are arranged at a distance (a) on the winding mandrel (1).

10. Method according to Claim 8, characterized by the use of a supporting element (2) which has joints (6) at the subsequent bend points.

## Revendications

1. Condensateur électrique, notamment pour l'électronique de puissance, qui est constitué d'un enroulement comprimé à plat de feuilles de matière plastique diélectrique, qui sont pourvues d'électrodes, notamment de couches métalliques minces régénérables, et dans lequel respectivement une électrode sort d'une face frontale de l'enroulement plat et y établit un contact avec une couche de choppage, caractérisé par le fait qu'à l'intérieur de l'enroulement plat (4) est disposé un élément d'appui (2), qui est fendu deux fois, en des emplacements diamétralement opposés, et que l'épaisseur (d) de l'élément d'appui (2) est telle que les zones de pliage (5) de l'enroulement plat (4) ne portent pas atteinte à la capacité de régénération et/ou à la durée de vie du condensateur.

2. Condensateur électrique suivant la revendication 1, caractérisé par le fait que l'élément d'appui (2) est constitué de deux parties superposées.

3. Condensateur électrique suivant la revendication 1 ou 2, caractérisé par le fait que les sommets de l'élément d'appui (2) sont arrondis.

4. Condensateur électrique suivant la revendication 2 ou 3, caractérisé par le fait que les parties de l'élément d'appui (2) sont reliées entre elles par une articulation (6).

5. Condensateur électrique suivant l'une des revendications 1 à 4, caractérisé par le fait qu'une feuille (3) est disposée sur le côté, tourné vers l'enroulement (4), de l'élément d'appui (2).

6. Condensateur électrique suivant l'une des revendications 1 à 5, caractérisé par le fait que l'élément d'appui (2) a une épaisseur d'environ 0,1 à environ 0,2 mm.

7. Condensateur électrique suivant la revendication 5, caractérisé par le fait que la feuille a une épaisseur d'environ 10 à environ 100 mm.

8. Procédé pour fabriquer un condensateur électrique suivant l'une des revendications 1 à 7, caractérisé par le fait qu'on met l'élément d'appui (2) sur un mandrin d'enroulement (1), qu'ensuite on fabrique l'enroulement (4) du condensateur et qu'après l'extraction du mandrin (1), on comprime à plat l'enroulement.

9. Procédé suivant la revendication 8, caractérisé par l'utilisation de deux éléments de support (2), qui sont disposés à une distance (a) sur le mandrin d'enroulement (1).

10. Procédé suivant la revendication 8, caractérisé par l'utilisation d'un élément de support (2) qui possède des articulations (6) aux points de pliage formés ultérieurement.

FIG 1

FIG 2

FIG 3

FIG 4

FIG 5

FIG 6

FIG 7